# DEMANDE DE BREVET EUROPEEN

(11) **EP 1 860 406 A1**
(43) Date de publication de la demande: **28.11.2007**
(21) Numéro de dépôt: 07107879.4
(22) Date de dépôt: 10.05.2007
(51) Int. Cl.: G01D 5/16

(54) **Détecteur de position sans contact pour mécanismes mobiles**

(30) Priorité: 11.05.2006 ES 200601080 U
(71) Demandeur: Zertan, S.A., 31132 Villatuerta (Navarra) (ES)
(72) Inventeur: Diez Garcia, Sergio, 31151, Obanos (NAVARRA) (ES); Creus Llorens, Francisco Javier, 31010, Barañain (NAVARRA) (ES)
(74) Mandataire: Intes, Didier Gérard André

(57) **Abrégé**

Détecteur de position sans contact pour mécanismes mobiles comprenant une partie mobile (1) en matériau conducteur magnétique, disposée sur l'élément à contrôler, et une partie fixe (2) faisant face à ladite partie mobile, cette partie fixe (2) possédant un élément magnétorésistif (5) qui est orienté par rapport à la direction du mouvement de l'élément sur lequel est intégrée la partie mobile.

## Description

La présente invention concerne le contrôle de mécanismes mobiles pour développer des fonctions relatives au mouvement spécifique desdits mécanismes, comme par exemple l'activation des feux de stop des véhicules en fonction de l'activité du mécanisme du frein, en proposant en ce sens un dispositif qui permet de détecter le mouvement d'un élément mobile à partir d'une certaine distance, dans des conditions qui s'avèrent avantageuses pour certaines applications.

### État de la technique

Sur les véhicules automobiles, il est exigé que l'activation de la fonction du freinage soit signalée par l'éclairage de feux rouges disposés à l'arrière du véhicule, afin que les autres conducteurs puissent réagir en cas de réduction de la vitesse du véhicule qui les précède, suite au freinage de celui-ci, afin d'éviter des accidents par collision par l'arrière.

Cette fonction est exécutée par un circuit électrique qui fournit l'alimentation nécessaire aux feux de stop au moment où le conducteur appuie sur la pédale de frein, soit en incorporant pour ce faire un interrupteur électrique mécaniquement couplé à la pédale de frein, soit par un interrupteur qui s'active par pression ou manocontact, disposé sur le maître-cylindre du frein, de manière à ce que ses contacts se ferment lorsque la pression hydraulique augmente à l'intérieur de ce cylindre.

Dans le cas de l'interrupteur mécanique, celui-ci oblige à effectuer un réglage à 100%, nécessaire pour synchroniser comme il se doit l'éclairage des feux de stop avec le mouvement de la pédale de frein, ce qui augmente le coût dudit interrupteur puisqu'il faut le doter des mécanismes de réglage correspondants, en plus de l'opération même de réglage qu'il faut effectuer.

Dans le cas du manocontact, son coût est élevé parce qu'il faut qu'il soit conçu pour supporter des pressions élevées, outre le fait que ledit manocontact et son accouplement au maître-cylindre constituent potentiellement des points de fuite du liquide de frein, ce qui, dans le cas limite de rupture de la membrane du manocontact, peut donner lieu à une panne hydraulique totale du frein, avec la répercussion correspondante sur la sécurité du véhicule.

Les deux systèmes présentent en plus les inconvénients relatifs à l'usure et à la dégradation par les cycles d'usure, associés aux dispositifs possédant des parties en frottement en mouvement relatif.

Pour résoudre de tels inconvénients, il a été développé des solutions basées sur la détection, à l'aide d'un capteur hall adossé à la paroi du maître-cylindre du frein, du mouvement d'un aimant permanent accouplé mécaniquement à un des pistons dudit maître-cylindre.

Cette solution supprime les inconvénients de l'interrupteur mécanique et du manocontact, particulièrement ceux liés au réglage et aux usures, mais elle présente d'autres inconvénients propres à sa réalisation, comme le fait que, en raison de la faible sensibilité du capteur hall, celui-ci doit être placé très près de l'aimant mobile, ce qui oblige à pratiquer un évasement sur la paroi du maître-cylindre, avec le coût supplémentaire qui s'ensuit pour ce faire et l'affaiblissement de la paroi du cylindre en réduisant son épaisseur.

L'aimant mobile doit en plus être monté à l'intérieur du maître-cylindre, ce qui complique sensiblement la construction de celui-ci, puisque, étant donné que l'aimant est fabriqué dans un matériau fragile, il est nécessaire d'utiliser des moyens de protection mécanique dudit aimant afin d'éviter qu'il se casse. L'aimant étant immergé dans le liquide de frein, il doit être aussi protégé contre la corrosion étant donné que le liquide de frein est corrosif et qu'il stocke de l'humidité, à laquelle l'aimant est sensible, ce qui occasionne à son tour une hausse du coût du système.

Par ailleurs, chacun sait que les éléments magnétorésistifs ont la caractéristique de détecter des variations minimes de l'orientation du champ magnétique par rapport à une direction préférentielle, ce qui leur confère une sensibilité qui est au moins dix fois supérieure à celle d'un élément hall, de sorte que lesdits éléments magnétorésistifs peuvent être utilisés en relation avec des circuits magnétiques dans lesquels le changement de la grandeur magnétique est plus petit lorsque le mécanisme bouge.

### Objet de l'invention

Selon l'invention, il est proposé un dispositif qui permet de détecter le mouvement d'éléments mobiles dans des conditions avantageuses pour des applications comme la signalisation du freinage sur les véhicules, en supprimant d'une manière satisfaisante les inconvénients susmentionnés des solutions connues pour cette fonction, mais sans que celle-ci soit une application limitative, puisque le dispositif peut s'appliquer à tout système ou mécanisme qui exerce une fonction dépendante du mouvement d'un élément mobile.

Le dispositif consiste en un capteur formé d'un aimant annulaire ou d'un ensemble d'aimants disposés de façon annulaire, à l'intérieur duquel est disposée axialement une carte à circuit imprimé sur laquelle est intégré avec une certaine orientation un élément magnétorésistif, cet ensemble étant placé de manière fixe face à un circuit magnétique mobile, par rapport auquel est orienté l'élément magnétorésistif.

Un dispositif est ainsi obtenu, dans lequel l'aimant annulaire ou l'ensemble annulaire d'aimants produit une distribution du champ magnétique telle que la composante dans la direction de l'axe de symétrie change de signe en un point situé en face et à une certaine distance de l'aimant ou de l'ensemble d'aimants, la première dérivée ou vitesse du changement de ladite composante du champ magnétique étant maximale autour de ce point et, par conséquent, la variation la plus importante du champ magnétique, lors du déplacement du circuit magnétique mobile face aux aimants du capteur, se produit précisément autour dudit point.

Cette disposition permet d'obtenir une sensibilité très élevée, et la distance entre le capteur et le circuit magnétique mobile peut augmenter de telle sorte que, dans le cas de l'application au mécanisme de frein d'un véhicule, il n'est pas nécessaire de pratiquer un logement spécial sur la paroi du maître-cylindre et de réduire, par conséquent, l'épaisseur de ladite paroi, puisque le capteur peut être placé à l'extérieur et le circuit magnétique mobile à l'intérieur, associé au piston correspondant, l'ensemble offrant un niveau parfait de détection pour sensibiliser le mouvement de l'ensemble mobile, ce qui représente un avantage technique et économique par rapport au système classique du capteur hall.

Selon une réalisation comprise dans le même concept de l'invention, il est prévu une disposition à deux aimants ou plus, disposés symétriquement par rapport à l'élément magnétorésistif, avec des plaques en fer pour obtenir une réflexion magnétique de focalisation du champ magnétique desdits aimants vers le point sur lequel doit se concentrer le champ magnétique ; cette disposition permettant une plus grande précision dans la détermination du point de focalisation du champ magnétique, qui avec l'aimant annulaire ou la distribution annulaire des aimants, outre le fait qu'elle requiert une quantité moindre de matériau d'aimant, occupe moins d'espace.

Le détecteur objet de l'invention présente, par conséquent, des caractéristiques vraiment avantageuses, grâce à son autonomie et sa nature préférentielle par rapport aux dispositions classiques qui sont utilisées pour les mêmes fonctions d'application.

### Description des figures

La figure 1 montre en perspective un schéma du détecteur objet de l'invention, avec le capteur formé d'un aimant annulaire.

La figure 2 est une vue en coupe longitudinale d'une application pratique du détecteur préconisé sur le maître-cylindre du mécanisme de frein d'un véhicule.

La figure 3 est une perspective en coupe de ladite application de la figure précédente.

La figure 4 est un schéma comme celui de la figure 1, avec le capteur formé d'un ensemble annulaire d'aimants.

La figure 5 est un schéma du détecteur avec le capteur formé de deux aimants disposés symétriquement et de plaques de réflexion du champ magnétique de ceux-ci.

### Description détaillée de l'invention

L'objet de l'invention concerne un détecteur de position destiné au contrôle d'éléments ou de mécanismes mobiles dont dépend la fonctionnalité d'une fonction comme par exemple, à titre non limitatif, l'éclairage des feux de stop sur les véhicules, et dont l'activation dépend du mouvement d'une partie du mécanisme de frein quand celui-ci est commandé par l'utilisateur.

Ledit détecteur comprend un ensemble magnétique formé d'une partie mobile (1) qui est disposée sur l'élément à contrôler, et d'une partie fixe (2) qui est disposée dans une position statique face à ladite partie mobile (1).

La partie mobile (1) consiste en un élément (3) en matériau conducteur magnétique (du fer par exemple), lequel, en cas d'application du détecteur pour l'éclairage des feux de stop des véhicules, est couplé, par exemple, à un des pistons du maître-cylindre (4), ledit élément (3) pouvant être de forme annulaire ou de toute autre forme qui s'adaptera à l'application, et peut être également constitué d'une pièce ferrique du mécanisme d'application lui-même, sans qu'une pièce additionnelle ne soit nécessaire.

La partie fixe (2) comprend un élément magnétorésistif (5), lequel est intégré sur une carte à circuit imprimé (6) qui est disposée axialement à travers un aimant annulaire (7), cet ensemble constituant un capteur magnétique qui est disposé perpendiculairement au sens de mouvement de l'élément mobile (3).

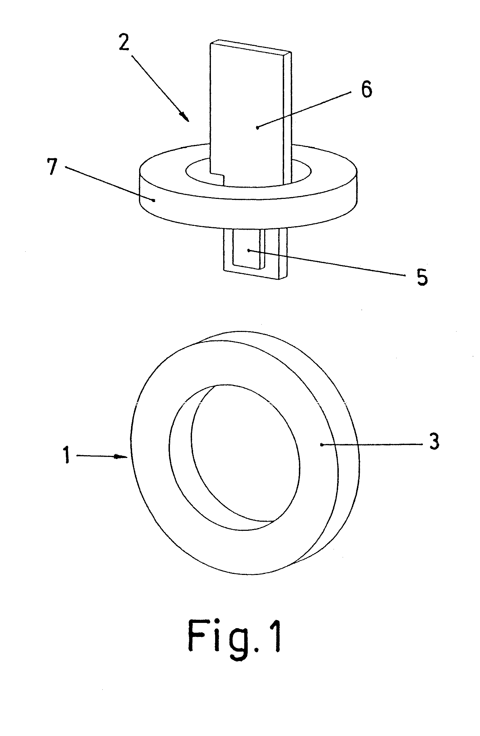

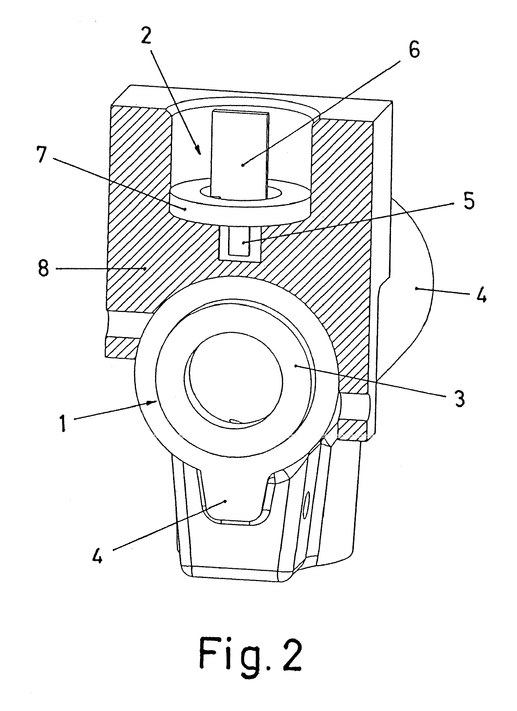

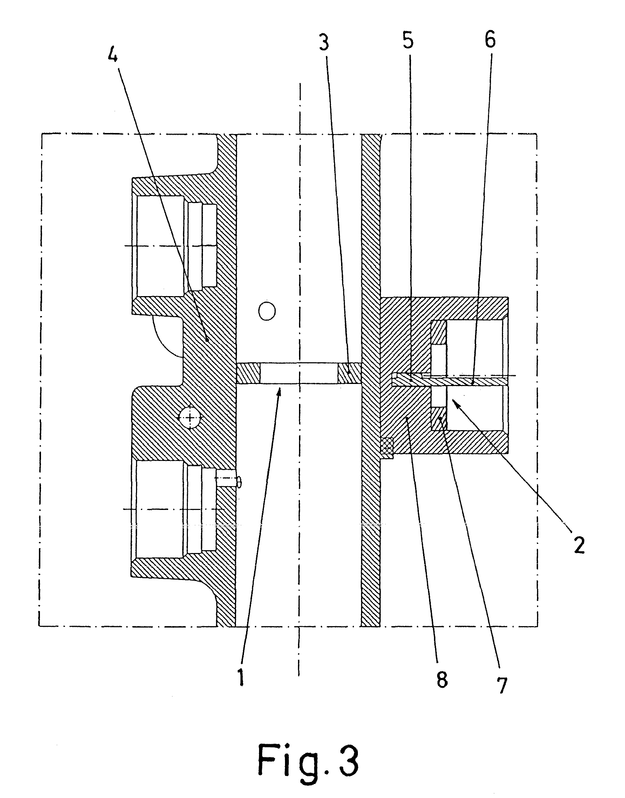

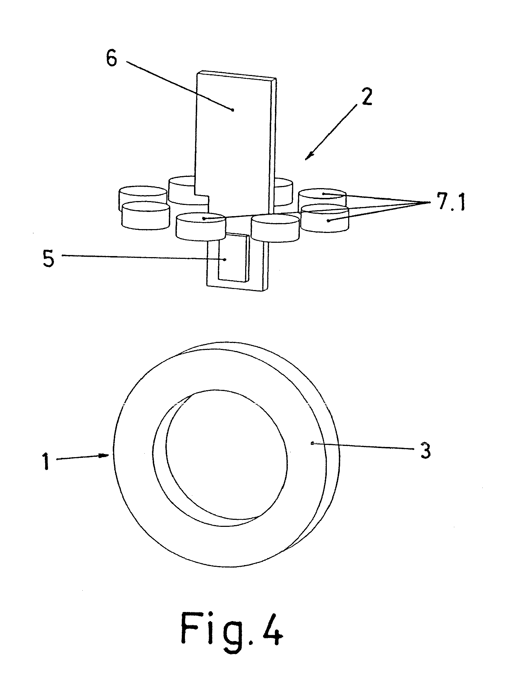

L'aimant annulaire (7) peut être formé d'un seul aimant en forme d'anneau, comme sur les figures 1 à 3, mais de même manière et avec le même effet, il peut s'agir d'un ensemble d'aimants (7.1) disposés de façon annulaire, comme sur la figure 4, sans que cela n'altère le concept puisque les deux dispositions permettent d'obtenir un effet fonctionnel équivalent.

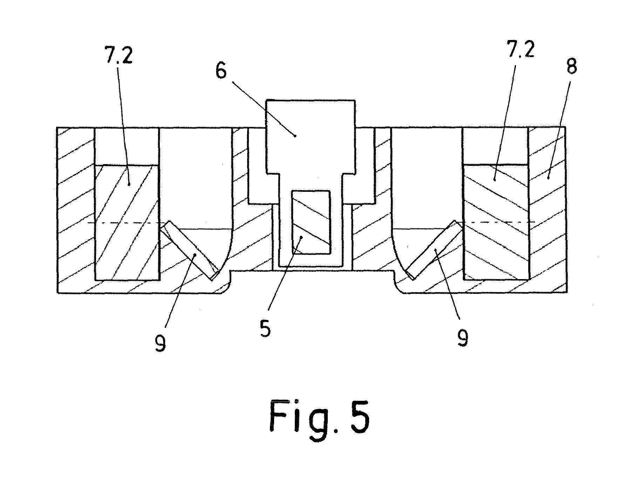

Sous le même concept fonctionnel, il est aussi prévu une solution avec des aimants (7.2) disposés symétriquement par rapport à l'élément magnétorésistif (5), selon la figure 5, étant incluses en correspondance avec lesdits aimants (7.2) des plaques en fer (9) pour la réflexion du champ magnétique de ceux-ci vers un point de focalisation. Cette disposition permet une grande précision du point de focalisation du champ magnétique, tout en pouvant disposer deux aimants ou plus dans ladite distribution symétrique par rapport à l'élément magnétorésistif (5), avec une plaque de réflexion (9) correspondante en relation avec chacun des aimants (7.2.).

L'ensemble du détecteur ainsi formé est installé de manière à ce que l'élément magnétique mobile (3) soit dans la position de repos juste en face du dispositif capteur que constitue la partie fixe (2), et avec l'élément magnétorésistif (5) orienté par rapport à la direction du mouvement dudit élément magnétique mobile (3) qui, dans le cas de l'application au mécanisme de frein des véhicules, correspond à la direction de l'axe du maître-cylindre (4).

Il est ainsi exploité le fait connu qu'un aimant annulaire (7), ou une répartition d'aimants (7.1 ou 7.2), produit une répartition de champ magnétique telle que la composante dans la direction de l'axe de symétrie change de signe en un point situé en face et à une certaine distance de l'aimant (7) ou des aimants (7.1. ou 7.2), la première dérivée ou vitesse de changement de ladite composante du champ magnétique étant maximale autour de ce point.

Ladite disposition préconisée permet donc d'obtenir une sensibilité très élevée, et la distance entre le capteur constitutif de la partie fixe (2) et l'élément (3) constitutif de la partie mobile (1) peut augmenter de telle sorte que, dans le cas de l'application au mécanisme de frein des véhicules, il ne soit pas nécessaire de pratiquer des évasements ni de réduire l'épaisseur de la paroi du maître-cylindre (4), étant donné qu'il suffit de fixer à l'extérieur de celui-ci le capteur constitutif de la partie fixe (2) du dispositif détecteur, à l'aide d'une pièce support (8).

Ledit dispositif détecteur objet de l'invention permet, dans tous les cas, de contrôler le mouvement et la position de tout élément mobile d'un mécanisme, sans contact direct entre la partie (2) qui comprend le capteur de détection et la partie (1) associée à l'élément mobile à contrôler, indépendamment de la vitesse du mouvement, d'une valeur de vitesse zéro (position statique) jusqu'à des vitesses élevées de plusieurs mètres/seconde.

## Revendications

1. Détecteur de position sans contact pour mécanismes mobiles, de type comprenant un capteur capable de détecter les variations d'un champ magnétique par le changement de position relative par rapport à un élément mobile, **caractérisé en ce qu'**il se compose d'une partie mobile (1) qui est associée à l'élément qu'il faut contrôler, et d'une partie fixe (2) qui est disposée statiquement et perpendiculairement, en face de la partie mobile, ladite partie mobile (1) comprenant un élément (3) en matériau conducteur magnétique, tandis que la partie fixe (2) comprend un élément magnétorésistif (5) qui est orienté par rapport à la direction du mouvement dudit élément magnétique mobile (3).

2. Détecteur de position sans contact pour des mécanismes mobiles, selon la première revendication, **caractérisé en ce que** l'élément magnétorésistif (5) est intégré sur une carte à circuit imprimé (6), laquelle est disposée axialement à travers un aimant annulaire (7).

3. Détecteur de position sans contact pour mécanismes mobiles, selon la première revendication, **caractérisé en ce que** l'élément magnétorésistif (5) est intégré sur une carte à circuit imprimé (6), laquelle est disposée axialement à travers un ensemble d'aimants (7.1) répartis de façon annulaire.

4. Détecteur de position sans contact pour mécanismes mobiles, selon la première revendication, **caractérisé en ce que** l'élément magnétorésistif (5) est intégré sur une carte à circuit imprimé (6), laquelle est disposée entre des aimants (7.2) disposés symétriquement par rapport à elle, avec l'incorporation par rapport auxdits aimants (7.2) de plaques en fer (9) correspondantes qui réfléchissent le champ magnétique de ceux-ci vers un point de focalisation.

5. Détecteur de position sans contact pour mécanismes mobiles, selon la première revendication, **caractérisé en ce que** l'élément magnétique mobile (3) peut être constitué d'une pièce ferrique appartenant au mécanisme d'application lui-même.
